# EUROPEAN PATENT APPLICATION

(11) **EP 4 186 859 A1**
(43) Date of publication of application: **31.05.2023**
(21) Application number: 21861661.3
(22) Date of filing: 26.08.2021
(51) Int. Cl.: C01B 33/02, C01B 33/037

(54) **CRUSHED POLYCRYSTALLINE SILICON LUMPS AND METHOD FOR PRODUCING SAME**

(30) Priority: 27.08.2020 JP 2020143619
(71) Applicant: Tokuyama Corporation, Shunan-shi, Yamaguchi 745-8648 (JP)
(72) Inventor: SAKIDA, Manabu, Shunan-shi, Yamaguchi 745-8648 (JP); KOYANAGI, Shinichiro, Shunan-shi, Yamaguchi 745-8648 (JP)
(74) Representative: Canzler & Bergmeier Patentanwälte Partnerschaft mbB
(86) International application number: PCT/JP2021/031313
(87) International publication number: WO 2022/045239

(57) **Abstract**

The purpose of the present invention is to provide crushed polycrystalline silicon lumps which have not only a low surface copper concentration but also a low surface iron concentration and a low surface zinc concentration. Crushed polycrystalline silicon lumps according to the present invention have a surface metal concentration of 15.0 pptw or less, with a copper concentration in the surface metal concentration being 0.30 pptw or less. This crushed polycrystalline silicon lumps are characterized in that, in the surface metal concentration, the total concentration of iron and zinc is 2.00 pptw or less, and preferably, the iron concentration is 1.25 pptw or less and the zinc concentration is 0.75 pptw or less.

## Description

### Technical Field

The present invention relates to a polycrystalline silicon crushed lump, and particularly to a polycrystalline silicon crushed lump having a clean surface, which is obtained by crushing a polycrystalline silicon rod. The present invention also relates to a method for producing a polycrystalline silicon crushed lump.

### Background Art

A high density integrated electronic circuit requires a high purity single crystalline silicon wafer. In general, a single crystalline silicon wafer is obtained by cutting a single crystalline silicon rod produced by a Czochralski (CZ) method. Polycrystalline silicon, which is also called polysilicon, is used as a raw material for producing the single crystalline silicon rod produced by the CZ method.

A Siemens method is known as a method for producing such polycrystalline silicon. In the Siemens method, a silicon core wire disposed inside a bell jar type reaction vessel is heated to a silicon precipitation temperature by energization, a silane compound gas such as trichlorosilane (SiHCl₃) or monosilane (SiH₄) and hydrogen are supplied thereto, and polycrystalline silicon is precipitated on the silicon core wire by a chemical vapor deposition method to obtain a high purity polycrystalline silicon rod.

The obtained polycrystalline silicon rod is crushed into a size suitable for an apparatus to be used in the next step or a size suitable for production of an object to be produced in the next step, classified, and conveyed to the next step. At this time, a surface of a polycrystalline silicon crushed lump is inevitably contaminated by metal impurities. The metal impurities, even in a small amount, cause defective sites in the single crystalline silicon wafer used in the high density integrated electronic circuit or the like, which finally deteriorates the performance of a device and limit a circuit density. Therefore, it is necessary to reduce a metal impurity concentration on the surface of the polycrystalline silicon crushed lump as much as possible, and cleaning or the like is performed to remove the metal impurities on the surface and to increase surface cleanliness.

As a method for cleaning a surface of silicon, it is known as an effective way to perform a cleaning treatment by using a hydrofluoric acid aqueous solution and then perform an etching treatment by using a hydrofluoric nitric acid aqueous solution (for example, see Patent Literature 1). Here, the hydrofluoric acid aqueous solution used in the first cleaning treatment is a strongly acidic solution, and thus has a strong effect of dissolving and ionizing metals. Since hydrofluoric acid has a function of removing a natural oxide film on the surface of polycrystalline silicon, metal impurities incorporated into the oxide film are also roughly removed. Further, in addition to the cleaning effect achieved by hydrofluoric acid, the hydrofluoric nitric acid aqueous solution used in the second cleaning treatment dissolves (etches) the surface of silicon by nitric acid, and thus contamination caused by the metal impurities on the surface of polycrystalline silicon is greatly reduced.

However, it is known that removability caused by metal ionization by using the above hydrofluoric acid is excellent for many metal elements as described above, but is low for copper (for example, see right column on page 16 of Non-Patent Literature 1). This is because copper has a high oxidation-reduction potential, and thus even ionized, copper re-adheres to the surface of silicon when copper comes into contact with silicon again and is reduced. Since copper is a metal having a very high thermal diffusion rate in silicon, there is a concern that even if a small amount of copper remains in the polycrystalline silicon crushed lump due to the low removability, the remaining copper diffuses into a device region on a surface of a single crystal substrate as a final product, which causes performance deterioration and reliability degradation of the electronic circuit (see paragraph 3 of Non-Patent Literature 2).

Therefore, there is a demand for a method for cleaning a surface of silicon that is capable of sufficiently removing copper, and as a method satisfying the demand, the present inventor has proposed a method for producing a polycrystalline silicon crushed lump (Patent Literature 2).

The method includes:
a) a step of crushing a polycrystalline silicon rod;
b) a first cleaning step of bringing an obtained crushed lump of the polycrystalline silicon rod into contact with a hydrofluoric nitric acid aqueous solution;
c) a second cleaning step of bringing a cleaned object of the polycrystalline silicon crushed lump obtained in the first cleaning step into contact with an alkaline aqueous solution containing hydrogen peroxide; and
d) a third cleaning step of bringing a cleaned object of the polycrystalline silicon crushed lump obtained in the second cleaning step into contact with a hydrofluoric nitric acid aqueous solution.

That is, according to the method in Patent Literature 2, by performing cleaning with the alkaline aqueous solution containing hydrogen peroxide as the second cleaning step following the first cleaning step with the hydrofluoric nitric acid aqueous solution, a polycrystalline silicon crushed lump in which surface contamination due to tungsten or cobalt is greatly reduced can be obtained. According to this method, the amount of most of surface metals other than tungsten and cobalt can be greatly reduced, a total concentration thereof is 15.0 pptw or less, and a concentration of copper can also be reduced to 0.30 pptw or less in Examples.

As a method for cleaning a polycrystalline silicon crushed lump, Patent Literature 3 discloses a method including a first cleaning step using an acidic cleaning solution containing hydrofluoric acid, hydrochloric acid, and hydrogen peroxide, and a second cleaning step using a cleaning solution containing nitric acid and hydrofluoric acid. In Examples of Patent Literature 3, details of the cleaning steps are disclosed as follows.

A polysilicon fragment was cleaned by the following treatment.
1. Pre-cleaning: pickling at 25°C +/- 5°C for 20 minutes with an HF/HCl/H₂O₂ aqueous solution containing water, 5% by mass of HF, 8% by mass of HCl, and 3% by mass of H₂O₂. Peeling caused by corrosion of silicon was about 0.02 µm.
2. Cleaning at 22°C for 5 minutes.
3. Main cleaning: corrosion at 8°C for 5 minutes in an HF/HNO₃ aqueous solution containing water, 3% by mass of HF, and 65% by mass of HNO₃. Peeling caused by corrosion was about 12 µm.
4. Cleaning at 22°C for 5 minutes.
5. Hydrophilization at 22°C for 5 minutes with an HF/HCl/H₂O₂ aqueous solution containing water, 8% by mass of HCl, and 2% by mass of H₂O₂.
6. Cleaning at 22°C.
7. Drying with most pure air of grade 100 at 80°C.

### Citation List

### Patent Literature

Patent Literature 1: Japanese Patent Laid-Open No. 2006-327838
Patent Literature 2: WO2019/189001 pamphlet
Patent Literature 3: National Publication of Internarial Application No. 2009-544564 (WO2008/012215)

### Non-Patent Literature

Non-Patent Literature 1: KANNO Itaru, "Wafer cleaning technology", surface technology, 1999, vol. 50, No. 10, p15-20
Non-Patent Literature 2: "Elucidation of influence of copper on semiconductor device characteristics", [online], Dec. 11, 2002, HITACHI news release, [searched on Jun. 3, 2020], Internet
<URL;https://www.hitachi.co.jp/New/cnews/2002/1211c/index.html>

### Summary of Invention

### Technical Problem

The method proposed in Patent Literature 2 is an excellent method by which a surface metal concentration can be greatly reduced in the cleaned polycrystalline silicon crushed lump, and in particular, the concentration of copper having low removability in the cleaning using hydrofluoric acid can be reduced to the value as in Examples, but on the other hand, removability for iron and zinc cannot be satisfied. That is, in the cleaning method according to Patent Literature 2, concentrations of many surface metals can be reduced by the effect of cleaning with the alkaline aqueous solution containing hydrogen peroxide in the second cleaning step. This is because metals that are not sufficiently removed by hydrofluoric acid are oxidized by contacting with hydrogen peroxide, and solubility in the alkaline aqueous solution (preferably, pH 9 to 14) is increased.

However, as described in Non-Patent Literature 1 (see line 8 in the right column on page 16 to line 6 in the left column on page 17, and Figure 2), among the surface metals, adhesion of iron and zinc to a surface of the oxide film formed on the surface of silicon greatly depends on a pH change of a cleaning liquid, and surface concentrations thereof can be kept low in a cleaning liquid in an acidic region to a neutral region, but the adhesion to the surface of the oxide film of silicon increases greatly when the cleaning liquid exhibits alkalinity. These metal ions of iron and zinc are likely to form hydrated ions with H₂O in an acidic solution, whereas the metal ions are likely to form complex ions with OH⁻ in an alkaline solution and to adhere to the surface of the oxide film.

From this, it is presumed that, in the first cleaning step according to Patent Literature 2, even if iron and zinc are dissolved and ionized in the cleaning liquid, iron and zinc precipitate again in a strong alkaline liquid environment in the subsequent second cleaning step, which makes it impossible to sufficiently reduce the concentrations on the surface of silicon. Therefore, in the cleaning of a polycrystalline silicon crushed lump according to Patent Literature 2, the surface concentration of copper can be reduced, but the surface concentrations of iron and zinc cannot be sufficiently reduced. Therefore, it is required to provide a polycrystalline silicon crushed lump in which a surface concentration of copper is sufficiently reduced and concentrations of iron and zinc are also low.

The cleaning steps according to Patent Literature 3 are similar to cleaning steps according to the present application to be described later, but are different in that the cleaning aqueous solution containing hydrochloric acid in addition to hydrofluoric acid and hydrogen peroxide is used in the first cleaning step. The hydrofluoric acid aqueous solution is a strongly acidic solution, and exhibits high removability by ionizing and dissolving many metals. However, it has been found through studies conducted by the present inventors that this effect is diminished in the presence of other acids, particularly hydrochloric acid, and removability for Na, Mg, Al, K, Ca, Cr, Fe, Ni, Co, Cu, Zn, W, Ti, and Mo, particularly Fe and Zn, adhering to polycrystalline silicon is insufficient.

### Solution to Problem

In view of the above problems, the present inventors have continued intensive studies. As a result, the present inventors have found that the above problems can be solved by performing cleaning with a cleaning aqueous solution containing hydrogen peroxide and hydrofluoric acid and having a hydrochloric acid content of a predetermined value or less as first cleaning, and then performing cleaning with a hydrofluoric nitric acid aqueous solution as second cleaning in cleaning of a polycrystalline silicon crushed lump, and have completed the present invention.

That is, the present invention provides a polycrystalline silicon crushed lump having a surface metal concentration of 15.0 pptw or less, in which a copper concentration is 0.30 pptw or less in the surface metal concentration, and
a total concentration of iron and zinc is 2.00 pptw or less in the surface metal concentration.

The present invention also provides a method for producing the polycrystalline silicon crushed lump. The method includes:
(a) a crushing step of crushing a polycrystalline silicon rod;
(b) a first cleaning step of bringing an obtained crushed lump of the polycrystalline silicon rod into contact with a first cleaning aqueous solution, which contains hydrogen peroxide and hydrofluoric acid and has a content of an acid other than hydrofluoric acid of 3% by mass or less; and
(c) a second cleaning step of bringing a cleaned object of the polycrystalline silicon crushed lump obtained in the first cleaning step into contact with a second cleaning aqueous solution containing hydrofluoric nitric acid.

### Advantageous Effects of Invention

The polycrystalline silicon crushed lump according to the present invention has a sufficiently cleaned surface, and has a metal impurity concentration of 15.0 pptw or less, in particular, a copper concentration of 0.30 pptw or less, and a total concentration of iron and zinc is as low as 2.00 pptw or less. Iron and zinc cause defects when remaining on a surface of silicon, and become main metals that cause performance deterioration and reliability degradation of an electronic circuit. In the semiconductor field in which densification of circuits progresses, the polycrystalline silicon crushed lump according to the present invention, in which amounts of copper, iron and zinc are reduced, is extremely useful as a raw material for producing a single crystalline silicon rod produced by a CZ method for cutting out a single crystalline silicon wafer with few defects.

### Description of Embodiments

Hereinafter, the present invention will be described in more detail.

### [Polycrystalline Silicon Crushed Lump]

A polycrystalline silicon crushed lump according to the present invention is obtained by crushing a polycrystalline silicon rod and performing classification. A method for producing the polycrystalline silicon rod is not limited, and the polycrystalline silicon rod is generally produced by a Siemens method. Here, the Siemens method is a method in which a silane source gas such as trichlorosilane or monosilane is brought into contact with a heated silicon core wire, whereby polycrystalline silicon is vapor grown (precipitated) on a surface of the silicon core wire by a chemical vapor deposition (CVD) method.

The obtained polycrystalline silicon rod is crushed to obtain the polycrystalline silicon crushed lump. Regarding a size of the polycrystalline silicon crushed lump, it is preferable that at least 90% by mass of the polycrystalline silicon crushed lump has a major axis length within a range of 2 mm to 160 mm. It is general to perform classification according to a particle size in this range, and specifically, the polycrystalline silicon crushed lump is classified into those having at least 90% by mass having a major axis length within a range of 90 mm to 160 mm, those having at least 90% by mass having a major axis length within a range of 10 mm to 120 mm, those having at least 90% by mass having a major axis length within a range of 10 mm to 60 mm, or those having at least 90% by mass having a major axis length within a range of 2 mm to 10 mm.

An impurity derived from a raw material or a peripheral apparatus is mixed into the polycrystalline silicon rod at the time of producing the polycrystalline silicon rod. This is called bulk contamination. In addition to bulk contamination, the polycrystalline silicon crushed lump is further subjected to various kinds of metal contamination due to contact with an apparatus or a handling member in posttreatment steps from the completion of producing the polycrystalline silicon rod to crushing of the crushed lump to package of the crushed lump, such as steps of crushing, classification, cleaning, conveyance, and package. These metals adhere to a surface of polycrystalline silicon, and are incorporated into and remain on an oxide film formed on the surface. This is called surface contamination. In the present invention, examples of a target element of a surface metal concentration in the polycrystalline silicon crushed lump include 14 elements, Na, Mg, Al, K, Ca, Cr, Fe, Ni, Co, Cu, Zn, W, Ti, and Mo.

In the polycrystalline silicon crushed lump according to the present invention, the surface metal concentration is 15.0 pptw or less. The surface metal concentration is more preferably 7.0 pptw to 13.0 pptw. Since the surface metal concentration is low as described above, the polycrystalline silicon crushed lump is useful as a raw material for producing a single crystalline silicon rod by the CZ method for cutting out a single crystalline silicon wafer with few defects.

In the polycrystalline silicon crushed lump according to the present invention, the surface metal concentration is low, and in particular, a copper concentration is as low as 0.30 pptw or less. As described above, adhered copper on the lump is a metal that is particularly likely to cause performance deterioration and reliability degradation of an electronic circuit. A cleaning effect of hydrofluoric acid, which is a general-purpose effective component of a cleaning liquid, is less likely to be sufficiently exhibited for removing copper. Therefore, the polycrystalline silicon crushed lump according to the present invention having a sufficiently low surface copper concentration has a large value in semiconductor munufavturing. The surface copper concentration is particularly preferably 0.20 pptw or less. A lower limit of the surface copper concentration is generally 0.05 pptw, and preferably 0.10 pptw.

Further, the main feature of the polycrystalline silicon crushed lump according to the present invention is that the surface concentration of copper, which is difficult to remove by a cleaning liquid containing hydrofluoric acid, is as low as 0.30 pptw or less, and a total concentration of a surface iron concentration and a surface zinc concentration is reduced to 2.00 pptw or less. That is, although the surface copper concentration is difficult to reduce as described above, according to cleaning with an alkaline aqueous solution containing hydrogen peroxide, which is performed in Patent Literature 2, the surface copper concentration can be reduced to a desired degree, but on the other hand, since the cleaning liquid exhibits alkalinity, it is difficult to reduce the surface metal concentrations of iron and zinc.

In such a situation, in the polycrystalline silicon crushed lump according to the present invention, not only the surface copper concentration is low, but also the surface iron concentration and the surface zinc concentration are low. In the surface metal concentration, the total concentration of iron and zinc is more preferably 1.80 pptw or less. A lower limit of the total concentration of the surface iron concentration and the surface zinc concentration is generally 0.60 pptw, and preferably 1.00 pptw.

Here, in the surface metal concentration, the iron concentration is preferably 1.25 pptw or less, and more preferably 1.00 pptw or less. A lower limit of the surface iron concentration is generally 0.50 pptw, and preferably 0.80 pptw. Further, the zinc concentration is preferably 0.75 pptw or less, and more preferably 0.60 pptw or less. A lower limit of the surface zinc concentration is generally 0.10 pptw, and preferably 0.20 pptw.

Nickel, which is milder than iron and zinc, is also a metal whose adhesion to the surface of silicon increases in an alkaline environment. In the polycrystalline silicon crushed lump according to the present invention, a nickel concentration is also preferably 0.30 pptw or less, and more preferably 0.20 pptw or less. A lower limit of the surface nickel concentration is generally 0.05 pptw, and preferably 0.10 pptw.

By repeating cleaning, the surface metal concentration can be further reduced. However, from the viewpoint of cost, work load, purity required in the market, and the like, the lower limit of the total surface metal concentration and the lower limits of the respective concentrations of copper, iron, zinc, and nickel on the surface may be in the ranges described above.

In the present invention, the surface metal concentration of the polycrystalline silicon crushed lump refers to a value measured by the following method. That is, metal concentration analysis for the surface of the polycrystalline silicon crushed lump is performed by a method in which a surface of a crushed polycrystalline silicon lump is decomposed and removed, and each metal element in an obtained sample liquid is analyzed and quantified by inductively coupled plasma mass spectrometry (ICP-MS). Specifically, about 400 g of the polycrystalline silicon crushed lump was transferred to a 500 ml clean Teflon (registered trademark) beaker, 100 ml of a solution (50% by mass-HF: 10 ml, 70% by mass-nitric acid: 90 ml) was added thereto, and extraction was performed at 25°C for 15 minutes. A liquid content in the Teflon beaker and a cleaning liquid after washing the surface of the polycrystalline silicon crushed lump with 100 ml of ultrapure water were transferred to a clean Teflon beaker to obtain a surface extraction liquid of the polycrystalline silicon crushed lump. The surface extraction liquid of the polycrystalline silicon crushed lump is evaporated to dryness, a 3.5% by mass-nitric acid aqueous solution is added thereto to adjust a volume to 20.0 ml, an ICP-MS measurement is performed to obtain each of surface metal concentrations of Na, Mg, Al, K, Ca, Cr, Fe, Ni, Co, Cu, Zn, W, Ti, and Mo, which is a value calculated as a concentration value per total weight of the polycrystalline silicon crushed lump.

### [Method for Producing Polycrystalline Silicon Crushed Lump]

A method for producing the polycrystalline silicon crushed lump having a clean surface as described above is not limited, and the following method can be used as a preferred production method. That is, a method including:
(a) a crushing step of crushing a polycrystalline silicon rod;
(b) a first cleaning step of bringing an obtained crushed lump of the polycrystalline silicon rod into contact with a first cleaning aqueous solution, which contains hydrogen peroxide and hydrofluoric acid and has a content of an acid other than hydrofluoric acid of 3% by mass or less; and
(c) a second cleaning step of bringing a cleaned object of the polycrystalline silicon crushed lump obtained in the first cleaning step into contact with a second cleaning aqueous solution containing hydrofluoric nitric acid.

According to this method, surface contamination caused by the crushing step (a) can be sufficiently cleaned to the range defined by the present invention by the subsequent cleaning steps (b) and (c).

### <(a) Crushing Step of Crushing Polycrystalline Silicon Rod>

In the crushing step of crushing a polycrystalline silicon rod, a polycrystalline silicon rod produced by the Siemens method may be crushed to the desired size by a common method using a crusher. Examples of the crusher include a manual hammer, and mechanical impact tools such as a jaw crusher, a roll crusher, and a hammer mill. Among hard metals, a WC/Co alloy is generally used as a material for these crushers. In the WC/Co alloy, a content of tungsten carbide is preferably 78% by mass to 90% by mass, and more preferably 80% by mass to 88% by mass, and a content of cobalt is preferably 10% by mass to 22% by mass, and more preferably 12% by mass to 20% by mass.

After the polycrystalline silicon rod is crushed, the obtained crushed lump is preferably classified according to the size described above.

### <(b) First Cleaning Step>

In the first cleaning step, the crushed lump of the polycrystalline silicon rod obtained in the step (a) is brought into contact with the first cleaning aqueous solution for cleaning. The first cleaning aqueous solution contains hydrogen peroxide and hydrofluoric acid. A hydrofluoric acid aqueous solution is a strongly acidic solution, has strong metal solubility, and ionizes many metals. In addition, since the solution is an acidic solution, iron and zinc are also removed in an ionized state, and re-adhesion to the surface of silicon is suppressed. In addition, since the first cleaning aqueous solution also has removability for the oxide film on the surface of polycrystalline silicon, metal impurities incorporated into the oxide film can also be removed.

In addition, since the first cleaning aqueous solution contains hydrogen peroxide, and even if copper having a high oxidation-reduction potential is contained in the surface metal impurities of the crushed lump, since hydrogen peroxide has an oxidation-reduction potential higher than that of copper, copper ions dissolved in the first cleaning aqueous solution are not reduced and kept in an ionic state even when the copper ions come into contact with silicon, and re-adhesion to the surface of the crushed lump is favorably prevented.

In the first cleaning aqueous solution, a concentration of hydrofluoric acid is preferably 1.0% by mass to 20.0% by mass, and more preferably 2.0% by mass to 10.0% by mass, in consideration of a level of an effect of reducing the surface metal concentration. Hydrogen peroxide contained in the first cleaning aqueous solution is preferably 1.0% by mass to 10.0% by mass, and more preferably 2.0% by mass to 7.0% by mass, from the viewpoint of the effect of reducing the surface copper concentration.

The first cleaning aqueous solution may contain an acid other than hydrofluoric acid. Examples of the acid other than hydrofluoric acid include inorganic acids such as hydrochloric acid and sulfuric acid, and organic acids such as acetic acid and oxalic acid. When the acid other than hydrofluoric acid is contained, the metal solubility by hydrofluoric acid may be impaired, and thus a content thereof is 3% by mass or less, preferably 1% by mass or less with respect to a total mass of the first cleaning aqueous solution, and more preferably substantially no acid other than hydrofluoric acid is contained.

The remainder other than the above is water. As water used for the first cleaning aqueous solution, it is naturally preferable to use water having a small metal content, and generally, ultrapure water is used.

As a cleaning method, the polycrystalline silicon crushed lump may be brought into contact with the first cleaning aqueous solution. As a specific method, the first cleaning aqueous solution may be sprayed to the polycrystalline silicon crushed lump. However, from the viewpoint of bringing the first cleaning aqueous solution into contact with the surface of the polycrystalline silicon crushed lump as uniformly as possible, a method of immersing the polycrystalline silicon crushed lump in the first cleaning aqueous solution is adopted. As an immersion tank, a box-shaped immersion tank or the like may be appropriately used. In the immersion, it is preferable to bring the polycrystalline silicon crushed lump into contact with the first cleaning aqueous solution while swinging. A swinging method is not particularly limited, and examples thereof include vertical movement and swing movement.

Cleaning in the first cleaning step can also be performed in multiple stages. The concentrations of hydrofluoric acid or the concentrations of hydrogen peroxide in the cleaning aqueous solution in respective stages may be the same as or different from each other.

A temperature of the first cleaning aqueous solution is not particularly limited, and is preferably 5°C to 40°C, and more preferably 10°C to 30°C. A contact time of the first cleaning aqueous solution and the polycrystalline silicon crushed lump is generally 1 minute to 20 minutes, and preferably 2 minutes to 15 minutes.

### <(c) Second Cleaning Step>

In the second cleaning step, the cleaned object of the polycrystalline silicon crushed lump obtained in the first cleaning step (b) is brought into contact with the second cleaning aqueous solution for cleaning. The second cleaning aqueous solution is a hydrofluoric nitric acid aqueous solution. Hydrofluoric nitric acid is a mixture of hydrofluoric acid and nitric acid. In the first cleaning step, the metal impurities, which include copper, iron, and zinc, and adhere to the surface of silicon in the polycrystalline silicon crushed lump and incorporated into the oxide film formed on the surface, can be effectively removed. Some of the metal impurities are embedded in a silicon surface layer due to impact caused by a hammer at the time of crushing the polycrystalline silicon rod or vibration caused by a sieve at the time of classification. The metal impurities embedded in the surface layer cannot be completely removed by the cleaning in the first cleaning step (b), and trace amounts remain.

The hydrofluoric nitric acid aqueous solution, which is the second cleaning aqueous solution in the second cleaning step, has an effect of forming a new oxide film by nitric acid in addition to the high solubility for the metal impurities and the effect of removing the oxide film achieved by the hydrofluoric acid aqueous solution. Therefore, in the second cleaning step, the surface layer is etched while the removal of the oxide film and the formation of the oxide film simultaneously proceed on the surface of the polycrystalline silicon crushed lump. Thus, the metal impurities embedded in the surface layer of the crushed lump that cannot be removed in the first cleaning step (b) are sufficiently removed, and the polycrystalline silicon crushed lump having clean surface is obtained.

In the second cleaning aqueous solution, a concentration of hydrofluoric acid is preferably 0.1% by mass to 3.0% by mass, and more preferably 0.2% by mass to 2.5% by mass, in consideration of the level of the effect of reducing the surface metal concentration. A concentration of nitric acid is preferably 40% by mass to 70% by mass, and more preferably 50% by mass to 70% by mass, from the viewpoint of high solubility with respect to the surface of the crushed lump.

As water used for the second cleaning aqueous solution, it is naturally preferable to use water having a small metal content, and generally, ultrapure water is used.

As a cleaning method in the second cleaning step, the method same as the contact between the polycrystalline silicon crushed lump and the first cleaning aqueous solution in the first cleaning step (b) can be used. In the second cleaning step, since the cleaning liquid is consumed by a reaction with silicon, it is preferable to add or replace the cleaning liquid as necessary.

Cleaning in the second cleaning step can also be performed in multiple stages. The concentrations of hydrofluoric acid or the concentrations of nitric acid in the cleaning aqueous solution in respective stages may be the same as or different from each other.

A temperature of the cleaning aqueous solution is not particularly limited, and is preferably 0°C to 70°C, more preferably 5°C to 40°C, and particularly preferably 10°C to 30°C.

In the second cleaning step, an etching amount of the surface of the polycrystalline silicon crushed lump may be appropriately determined according to the size or shape of the polycrystalline silicon to be cleaned, and a contamination amount in the crushing step. However, from the viewpoint of sufficiently removing the oxide film and sufficiently reducing metal contamination, the etching amount is preferably 1 µm to 15 µm, and more preferably 3 µm to 13 µm. A contact time of the hydrofluoric nitric acid aqueous solution and the polycrystalline silicon crushed lump is generally 1 minute to 20 minutes, and preferably 2 minutes to 15 minutes.

In the present invention, the etching amount of the polycrystalline silicon crushed lump means the amount (the thickness) of silicon removed by etching, and as will be described later, the etching amount refers to a value obtained based on a weight difference before and after etching of polycrystalline silicon small-pieces etched together with the polycrystalline silicon crushed lump.

### <(d) Third Cleaning Step>

It is possible to produce a polycrystalline silicon crushed lump in which the surface metal concentration is reduced to the state described above by the cleaning described above, but in order to further improve the cleanliness of the surface, it is preferable to further perform (d) a third cleaning step of
bringing a cleaned object of the polycrystalline silicon crushed lump obtained in the second cleaning step into contact with a third cleaning aqueous solution, which contains hydrogen peroxide and hydrofluoric acid and has a content of an acid other than hydrofluoric acid of 3% by mass or less.

A reason why to perform the third cleaning step (d) as described above is that metal impurities may be dissolved at a considerably high concentration in the cleaning liquid after the second cleaning step (c), and some of the metal impurities contained in the cleaning liquid may be incorporated again in a very small amount into the oxide film newly formed on the surface of the polycrystalline silicon crushed lump after the second cleaning step (c). That is, the polycrystalline silicon crushed lump is again brought into contact with the third cleaning aqueous solution containing hydrogen peroxide and hydrofluoric acid to remove the metal impurities incorporated into the newly formed oxide film.

Details of cleaning in the third cleaning step are the same as those in the first cleaning step (b). The third cleaning aqueous solution according to a preferred embodiment is also the same as the first cleaning aqueous solution. An aqueous solution containing hydrogen peroxide and hydrofluoric acid discharged from the third cleaning step (d) has the same liquid composition as that of the first cleaning step (b), which is an upstream step of cleaning, and from the viewpoint of cleanliness required for the cleaning liquid used in the first cleaning step, the aqueous solution discharged from the third cleaning step is in a sufficiently acceptable state, and is thus efficient to be reused in the first cleaning step. That is, a cleaning liquid discharged from the third cleaning step may be circulated to the first cleaning step and reused as a part or all of the first cleaning aqueous solution.

### <(e) Fourth Cleaning Step>

Further, in the method for producing the polycrystalline silicon crushed lump, it is preferable to further perform (e) a fourth cleaning step of
bringing a cleaned object of the polycrystalline silicon crushed lump obtained in the third cleaning step into contact with a fourth cleaning aqueous solution containing hydrofluoric nitric acid.

The polycrystalline silicon from which the oxide film has been removed in the third cleaning step (d) is gradually oxidized in air to form an oxide film. Since the oxide film gradually formed in air is unevenly generated on the surface of polycrystalline silicon, contaminants may be incorporated thereto. Therefore, in the fourth cleaning step (e), by forming an oxide film in advance on the surface of the crushed lump by using nitric acid, the incorporation of contaminants in air is further suppressed. Since the metal impurities are sufficiently removed by the cleaning steps (b) to (d), there is almost no possibility that the metal impurities remain in the oxide film newly formed in the fourth cleaning step.

Details of cleaning in the fourth cleaning step are the same as those in the second cleaning step (c). The fourth cleaning aqueous solution according to a preferred embodiment is also substantially the same as the second cleaning aqueous solution, but in the fourth cleaning step, a concentration of hydrofluoric acid may be low in order to allow the oxide film to remain. Therefore, in the fourth cleaning aqueous solution, the concentration of hydrofluoric acid may be slightly lower than that in the second cleaning aqueous solution from the viewpoint of allowing a surface oxide layer to remain and reliably removing the metal impurities.

The fourth cleaning step is divided into two or more cleaning steps by using different concentrations of hydrofluoric nitric acid, and in particular, it is preferable to use a cleaning aqueous solution in which the concentration of hydrofluoric acid is reduced in order to ensure that the oxide film remains in the last cleaning step. An etching amount of the surface of the polycrystalline silicon crushed lump in the fourth cleaning step is preferably 0.5 µm to 10 µm, and a total etching amount, including the etching amount in the second cleaning step (c), is preferably in a range not exceeding 30 µm.

A hydrofluoric nitric acid aqueous solution discharged after the fourth cleaning step (e) has the same liquid composition as that of the second cleaning step (c), which is an upstream step of cleaning, and from the viewpoint of cleanliness required for the second cleaning aqueous solution used in the second cleaning step, the hydrofluoric nitric acid aqueous solution discharged from the fourth cleaning step is in a sufficiently acceptable state, and is thus efficient to be reused in the second cleaning step. That is, a cleaning liquid discharged from the fourth cleaning step may be circulated to the second cleaning step and reused as a part or all of the second cleaning aqueous solution.

### <Other Steps>

In general, a large amount of silicon fine powder adheres to the surface of the crushed lump of the polycrystalline silicon rod obtained in the step (a). The silicon fine powder not only contains a large amount of impurities but also inhibits the cleaning performance in the first cleaning step (b), and thus it is preferable to remove the silicon fine powder as much as possible and then supply the crushed lump to the first cleaning step (b). Specifically, it is preferable to preliminarily bring the polycrystalline silicon crushed lump into contact with pure water or ultrapure water before bringing the polycrystalline silicon crushed lump into contact with the first cleaning aqueous solution to remove the silicon fine powder adhering to the surface.

A water washing step may be included between the respective cleaning steps and/or after the completion of the cleaning. By including the water washing step, the cleaning liquid can be prevented from being brought into the next step, and it is also effective from the viewpoint of removing contaminants adhering to the surface of the polycrystalline silicon crushed lump. On the other hand, moisture is brought into the next step by water washing, and concentrations of cleaning components in the cleaning liquid may be reduced, whereby the removal capability of the cleaning liquid to remove the metal impurities may be lowered. From this viewpoint, the water washing step may be omitted. As water used in the water washing step, purified water containing a small amount of metal impurities in water is preferably used, and ultrapure water is more preferably used.

In addition, when the surface concentrations of the metal impurities cannot be sufficiently reduced even after the cleaning steps (b) to (e) are performed, cleaning in which the first cleaning step (b) and the second cleaning step (c) are combined may be repeatedly performed a necessary number of times.

A drying step may be included after a final cleaning step of the polycrystalline silicon crushed lump. Accordingly, moisture adhering to the surface of the polycrystalline silicon crushed lump can be removed. Examples of a drying method include natural drying, air drying, heat drying, and drying under a reduced pressure. As the drying method, a plurality of methods may be combined. Cooling may be performed together with drying.

The polycrystalline silicon crushed lump obtained as described above is preferably packed in a resin bag to form a polycrystalline silicon crushed lump package. The resin bag may be made of a resin material such as polyethylene, polypropylene, polyvinyl chloride, or nylon. A shape of the bag is not particularly limited as long as the shape allows sealing of the packed polycrystalline silicon crushed lump.

### [Examples]

Hereinafter, the present invention will be described in more detail with reference to Examples, but the present invention is not limited to these Examples. The etching amount and surface metal contamination amounts of the polycrystalline silicon crushed lump are values obtained as follows.

### 1) Etching Amount of Polycrystalline Silicon Crushed Lump

Polycrystalline silicon small-pieces consisting of 50 pieces of cubic polycrystalline silicon each having a side of about 7 mm was prepared for an etching amount measurement. A total mass of the polycrystalline silicon small-pieces in a dry state was measured in advance, and the polycrystalline silicon small-pieces in a state of being stored in a polytetrafluoroethylene (PTFE) net was subjected to cleaning together with the polycrystalline silicon crushed lump. Next, the total mass of the polycrystalline silicon small-pieces after the cleaning treatment was measured, and a removed surface layer thickness (the etching amount) was calculated based on a mass difference before and after the cleaning treatment and a total surface area of the polycrystalline silicon small-pieces.

### 2) Surface Metal Contamination Amounts of Poly crystalline Silicon Crushed Lump

About 400 g of the polycrystalline silicon crushed lump was transferred to a 500 ml clean polytetrafluoroethylene beaker, 100 ml of a solution (50% by mass-HF: 10 ml, 70% by mass-nitric acid: 90 ml) was added thereto, and extraction was performed at 25°C for 15 minutes. A liquid content in the beaker and a cleaning liquid after washing the surface of the polycrystalline silicon crushed lump with 100 ml of ultrapure water were transferred to a clean polytetrafluoroethylene beaker to obtain a surface extraction liquid of the polycrystalline silicon crushed lump. The surface extraction liquid of the polycrystalline silicon crushed lump was evaporated to dryness, and a 3.5% by mass-nitric acid aqueous solution was added thereto to adjust the volume to 20.0 ml, and an ICP-MS measurement was performed to measure each of surface metal masses of Na, Mg, Al, K, Ca, Cr, Fe, Ni, Co, Cu, Zn, W, Ti, and Mo. The measured value of each of the surface metal masses was divided by the mass of the polycrystalline silicon crushed lump before extraction to evaluate the content (pptw) per unit mass of the polycrystalline silicon crushed lump. "8900" manufactured by Agilent was used as an ICP-MS measurement apparatus. The measurement was performed four times in each of Examples and Comparative Examples, and an average value was calculated.

### Example 1

### <Crushing Step (a)>

A polycrystalline silicon rod was produced in a reduction reaction furnace by a Siemens method, and air passed through a high efficiency particulate air (HEPA) filter was introduced into the furnace, then the furnace was open to the atmosphere, and the polycrystalline silicon rod was taken out of the furnace. The polycrystalline silicon rod that had been taken out was crushed into crushed lumps with a hammer including an impact portion made of a tungsten carbide/cobalt alloy (a content of tungsten carbide: 82% by mass, a content of cobalt: 18% by mass) such that at least 90% by mass of the crushed lumps had a major axis length in a range of 10 mm to 120 mm.

### <First Cleaning Step (b)>

About 5 kg of the obtained polycrystalline silicon crushed lump was subjected to a first cleaning step of bringing the polycrystalline silicon crushed lump into contact with a first cleaning aqueous solution containing hydrogen peroxide at a concentration of 3% by mass and hydrofluoric acid at a concentration of 5% by mass. That is, 5 kg of the polycrystalline silicon crushed lump was charged into a resin basket, and the basket was immersed in a cleaning tank containing the first cleaning aqueous solution. The immersion was performed at a liquid temperature of 20°C for 3 minutes.

### <Water Washing Step>

After the first cleaning step (b), the polycrystalline silicon crushed lump was taken out from the cleaning tank and immersed in a water washing tank containing ultrapure water (liquid temperature: 20°C) for 3 minutes. After water washing, the polycrystalline silicon crushed lump was taken out from the water washing tank and dried by air blowing. By performing water washing before performing the second cleaning step (c), hydrofluoric acid and hydrogen peroxide used in the first cleaning step (b) can be prevented from being mixed into the second cleaning step.

### <Second Cleaning Step (c)>

Subsequently, a cleaned object of the polycrystalline silicon crushed lump obtained in the first cleaning step (b) was subjected to a second cleaning step of bringing the cleaned object into contact with a second cleaning aqueous solution, as a hydrofluoric nitric acid aqueous solution containing hydrofluoric acid at a concentration of 3% by mass and nitric acid at a concentration of 66% by mass. That is, 5 kg of the polycrystalline silicon crushed lump was charged into a resin basket, and the basket was immersed in a cleaning tank containing the second cleaning aqueous solution in which 50% by mass hydrofluoric acid and 70% by mass nitric acid were mixed at a volume ratio of 1: 14. The immersion was performed at a liquid temperature of 20°C until a time at which an etching amount of the polycrystalline silicon crushed lump was measured to be 9 µm. The cleaning tank in the second cleaning step (c) also contained polycrystalline silicon small-pieces for measuring the etching amount, and the etching amount in the cleaning was measured.

### <Water Washing Step>

After the second cleaning step (c), the polycrystalline silicon crushed lump was taken out from the cleaning tank and immersed in a water washing tank containing ultrapure water (liquid temperature: 20°C) for 3 minutes. After water washing, the polycrystalline silicon crushed lump was taken out from the cleaning tank and dried by air blowing. By performing water washing before performing the third cleaning step (d), hydrofluoric nitric acid, particularly nitric acid used in the second cleaning step (c) can be prevented from being mixed into the third cleaning step (d).

### <Third Cleaning Step (d)>

Subsequently, as the third cleaning step (d), a cleaned object of the polycrystalline silicon crushed lump obtained in the second cleaning step (c) was again subjected to cleaning by using, as a cleaning liquid, a third cleaning aqueous solution containing hydrogen peroxide at a concentration of 3% by mass and hydrofluoric acid at a concentration of 5% by mass, as in the first cleaning step (b). Details of the cleaning operation were the same as those in the first cleaning step (b).

### <Water Washing Step>

The polycrystalline silicon crushed lump taken out from the cleaning tank after the third cleaning step (d) was subjected to water washing and dried by air blowing as in the water washing step after the first cleaning step (b).

### <Fourth Cleaning Step (e)>

Subsequently, a cleaned object of the polycrystalline silicon crushed lump obtained in the third cleaning step (d) was subjected to a fourth cleaning step of bringing the cleaned object into contact with a fourth cleaning aqueous solution, which is a hydrofluoric nitric acid aqueous solution containing hydrofluoric acid at a concentration of 2% by mass and nitric acid at a concentration of 67% by mass. That is, 5 kg of the polycrystalline silicon crushed lump was charged into a resin basket, and the basket was immersed in a cleaning tank containing the fourth cleaning aqueous solution in which 50% by mass hydrofluoric acid and 70% by mass nitric acid were mixed at a volume ratio of 1:20. The immersion was performed at a liquid temperature of 20°C until a time at which an etching amount of the polycrystalline silicon crushed lump was measured to be 3 µm. In the fourth cleaning step, the cleaning tank also contained polycrystalline silicon small-pieces for measuring the etching amount, and the etching amount in the cleaning was measured.

### <Water Washing Step>

The polycrystalline silicon crushed lump taken out from the cleaning tank after the fourth cleaning step (e) was subjected to water washing and dried by air blowing as in the water washing step after the first cleaning step (b).

Surface metal contamination amounts of the polycrystalline silicon crushed lump obtained through the above cleaning method were measured, and then the polycrystalline silicon crushed lump was packed in a resin bag. Measurement results of the surface metal contamination amounts were shown in Table 2. A total etching amount in the Table 1 includes the thicknesses of the oxide film removed in the first cleaning step and the third cleaning step in addition to the etching amounts in the second cleaning step and the fourth cleaning step.

### Example 2

A polycrystalline silicon crushed lump was cleaned in the same manner as in Example 1 except that a cleaning liquid (the third cleaning aqueous solution containing hydrogen peroxide at a concentration of 3% by mass and hydrofluoric acid at a concentration of 5% by mass) discharged in the third cleaning step (d) was reused in the first cleaning step (b). Measurement results of surface metal contamination amounts of the obtained polycrystalline silicon crushed lump were also shown in Table 2.

### Example 3

A polycrystalline silicon crushed lump was cleaned in the same manner as in Example 1 except that the cleaning aqueous solution containing hydrogen peroxide at a concentration of 3% by mass and hydrofluoric acid at a concentration of 5% by mass, which was used in the first cleaning step (b) and the third cleaning step (d), was changed to a cleaning aqueous solution containing 5% by mass of hydrogen peroxide at a concentration and 5% by mass of hydrofluoric acid. Measurement results of surface metal contamination amounts of the obtained polycrystalline silicon crushed lump were also shown in Table 2.

### Example 4

A polycrystalline silicon crushed lump was cleaned in the same manner as in Example 1 except that the second cleaning aqueous solution containing hydrofluoric acid at a concentration of 3% by mass and nitric acid at a concentration of 66% by mass used in the second cleaning step (c) was changed to a cleaning aqueous solution containing hydrofluoric acid at a concentration of 5% by mass and nitric acid at a concentration of 63% by mass, and the etching amount of the polycrystalline silicon crushed lump in the cleaning step was changed to 10 µm. Measurement results of surface metal contamination amounts of the obtained polycrystalline silicon crushed lump were also shown in Table 2.

### Example 5

A polycrystalline silicon crushed lump was cleaned in the same manner as in Example 1 except that the cleaning time in the first cleaning step (b) was changed from 3 minutes to 10 minutes. Measurement results of surface metal contamination amounts of the obtained polycrystalline silicon crushed lump were also shown in Table 2.

### Comparative Example 1

A polycrystalline silicon crushed lump was cleaned in the same manner as in Example 1 except that the cleaning aqueous solution containing hydrogen peroxide at a concentration of 3% by mass and hydrofluoric acid at a concentration of 5% by mass, which was used in the first cleaning step (b) and the third cleaning step (d), was changed to a 5% by mass hydrofluoric acid aqueous solution. Measurement results of surface metal contamination amounts of the obtained polycrystalline silicon crushed lump were also shown in Table 2.

### Comparative Example 2

As a first cleaning step, the operation same as in the second cleaning step (c) in Example 1 was performed by using a hydrofluoric nitric acid aqueous solution containing hydrofluoric acid at a concentration of 3% by mass and nitric acid at a concentration of 66% by mass as a cleaning liquid.

Next, as a second cleaning step, the operation same as in the first cleaning step (b) in Example 1 was performed by using a cleaning aqueous solution containing tetramethylammonium hydroxide (TMAH) at a concentration of 2% by mass and hydrogen peroxide at a concentration of 2% by mass.

Further, as a third cleaning step, the operation same as in the first cleaning step was performed by using a hydrofluoric nitric acid aqueous solution containing hydrofluoric acid at a concentration of 2% by mass and nitric acid at a concentration of 67% by mass as a cleaning liquid, and the cleaning step was finished.

Except for the above, a polycrystalline silicon crushed lump was cleaned in the same manner as in Example 1. Measurement results of surface metal contamination amounts of the obtained polycrystalline silicon crushed lump were also shown in Table 2.

### Comparative Example 3

As a first cleaning step, the operation same as in the first cleaning step (b) in Example 1 was performed except using a cleaning aqueous solution containing hydrochloric acid at a concentration of 8% by mass, hydrogen peroxide at a concentration of 3% by mass, and hydrofluoric acid at a concentration of 5% by mass.

Next, as a second cleaning step, the operation same as in the second cleaning step (c) in Example 1 was performed except using a cleaning aqueous solution containing hydrofluoric acid at a concentration of 3% by mass and nitric acid at a concentration of 65% by mass.

Further, as a third cleaning step, the operation same as in the third cleaning step (d) in Example 1 was performed except using a cleaning aqueous solution containing hydrochloric acid at a concentration of 8% by mass and hydrogen peroxide at a concentration of 3% by mass.

Except for the above, a polycrystalline silicon crushed lump was cleaned in the same manner as in Example 1. Measurement results of surface metal contamination amounts of the obtained polycrystalline silicon crushed lump were also shown in Table 2.

**[Table 1]**

| Step | Treatment content | Example 1 | Example 2 | Example 3 | Example 4 | Example 5 | Comparative Example 1 | Comparative Example 2 | Comparative Example 3 |
|---|---|---|---|---|---|---|---|---|---|
| First cleaning | Cleaning liquid composition | HF: 5% | HF: 5% | HF: 5% | HF: 5% | HF: 5% | HF: 5% | HF: 3% | HF: 5% |
| | | H₂O₂: 3% | H₂O₂: 3% | H₂O₂: 5% | H₂O₂: 3% | H₂O₂: 3% | | HNOs: 66% | HCl: 8% |
| | | | Circulated from third cleaning step | | | | | | H₂O₂: 3% |
| | Cleaning time | 3 min | 3 min | 3 min | 3 min | 10 min | 3 min | Etching amount: 9 µm | 3 min |
| Water washing | Immersion in ultrapure water | 3 min | 3 min | 3 min | 3 min | 3 min | 3 min | 3 min | 3 min |
| Second cleaning | Cleaning liquid composition | HF: 3% | HF: 3% | HF: 3% | HF: 5% | HF: 3% | HF: 3% | TMAH: 2% | HF: 3% |
| | | HNO₃: 66% | HNO₃: 66% | HNO₃: 66% | HNO₃: 63% | HNO₃: 66% | HNO₃: 66% | H₂O₂: 2% | HNO₃: 65% |
| | Etching amount | 9 µm | 9 µm | 9 µm | 10 µm | 9 µm | 9 µm | Cleaning: 3 min | 9 µm |
| Water washing | Immersion in ultrapure water | 3 min | 3 min | 3 min | 3 min | 3 min | 3 min | 3 min | 3 min |
| Third cleaning | Cleaning liquid composition | HF: 5% | HF: 5% | HF: 5% | HF: 5% | HF: 5% | HF: 5% | HF: 2% | HCl: 8% |
| | | H₂O₂: 3% | H₂O₂: 3% | H₂O₂: 5% | H₂O₂: 3% | H₂O₂: 3% | | HNO₃: 67% | H₂O₂: 3% |
| | Cleaning time | 3 min | 3 min | 3 min | 3 min | 3 min | 3 min | Etching amount: 3 µm | 3 min |
| Water washing | Immersion in ultrapure water | 3 min | 3 min | 3 min | 3 min | 3 min | 3 min | 3 min | 3 min |
| Fourth cleaning | Cleaning liquid composition | HF: 2% | HF: 2% | HF: 2% | HF: 2% | HF: 2% | HF: 2% | No | HF: 2% |
| | | HNO₃: 67% | HNO₃: 67% | HNO₃: 67% | HNO₃: 67% | HNOs: 67% | HNO₃: 67% | | HNO₃: 67% |
| | Etching amount | 3 µm | 3 µm | 3 µm | 3 µm | 3 µm | 3 µm | | 3 µm |
| | Total etching amount | 12.5 µm | 12.5 µm | 12.5 µm | 13.5 µm | 12.5 µm | 12.5 µm | 12.5 µm | 12.5 µm |

**[Table 2]**

| Element | Unit | Example 1 | Example 2 | Example 3 | Example 4 | Example 5 | Comparative Example 1 | Comparative Example 2 | Comparative Example 3 |
|---|---|---|---|---|---|---|---|---|---|
| Total of 14 elements as surface metals | pptw | 11.04 | 11.16 | 9.04 | 10.83 | 10.91 | 11.91 | 12.52 | 18.2 |
| Total of Fe and Zn as surface metals | pptw | 1.55 | 1.8 | 1.37 | 1.61 | 1.53 | 2.13 | 3.54 | 2.59 |
| Na | pptw | 0.99 | 1.03 | 1.16 | 1.04 | 1.44 | 1.1 | 1.05 | 2.97 |
| Mg | pptw | 1.13 | 1.13 | 0.87 | 0.75 | 0.62 | 0.89 | 0.75 | 0.74 |
| Al | pptw | 0.6 | 0.5 | 0.58 | 0.71 | 0.69 | 0.77 | 1.09 | 0.61 |
| K | pptw | 1.06 | 0.9 | 0.24 | 0.97 | 0.88 | 0.64 | 0.41 | 0.52 |
| Ca | pptw | 1.13 | 1.2 | 0.7 | 0.97 | 0.7 | 0.85 | 0.73 | 1.73 |
| Cr | pptw | 0.2 | 0.18 | 0.22 | 0.36 | 0.31 | 0.41 | 1.56 | 1.16 |
| Fe | pptw | 0.99 | 1.2 | 0.94 | 1.02 | 0.98 | 1.27 | 2.03 | 1.9 |
| Ni | pptw | 0.09 | 0.11 | 0.12 | 0.18 | 0.15 | 0.23 | 0.21 | 0.15 |
| Co | pptw | 1 | 1.03 | 0.87 | 0.9 | 0.58 | 0.87 | 0.66 | 0.46 |
| Cu | pptw | 0.11 | 0.18 | 0.06 | 0.2 | 0.14 | 0.89 | 0.27 | 0.28 |
| Zn | pptw | 0.56 | 0.6 | 0.43 | 0.59 | 0.55 | 0.86 | 1.51 | 0.69 |
| w | pptw | 1.11 | 1.24 | 0.93 | 0.7 | 1.33 | 1.25 | 0.78 | 4.32 |
| Ti | pptw | 1.08 | 0.9 | 1.13 | 1.34 | 1.48 | 1.02 | 0.78 | 1.78 |
| Mo | pptw | 0.99 | 0.96 | 0.79 | 1.1 | 1.06 | 0.86 | 0.69 | 0.89 |

## Claims

1. A polycrystalline silicon crushed lump having a surface metal concentration of 15.0 pptw or less, wherein
a copper concentration is 0.30 pptw or less in the surface metal concentration, and
a total concentration of iron and zinc is 2.00 pptw or less in the surface metal concentration.

2. The polycrystalline silicon crushed lump according to claim 1, wherein
an iron concentration is 1.25 pptw or less in the surface metal concentration.

3. The polycrystalline silicon crushed lump according to claim 1 or 2, wherein
a zinc concentration is 0.75 pptw or less in the surface metal concentration.

4. The polycrystalline silicon crushed lump according to any one of claims 1 to 3, wherein
a nickel concentration is 0.30 pptw or less in the surface metal concentration.

5. The polycrystalline silicon crushed lump according to any one of claims 1 to 4, wherein
the surface metal concentration is a total concentration of Na, Mg, Al, K, Ca, Cr, Fe, Ni, Co, Cu, Zn, W, Ti, and Mo.

6. A method for producing the polycrystalline silicon crushed lump according to claim 1, comprising:
(a) a crushing step of crushing a polycrystalline silicon rod;
(b) a first cleaning step of bringing an obtained crushed lump of the polycrystalline silicon rod into contact with a first cleaning aqueous solution, which contains hydrogen peroxide and hydrofluoric acid and has a content of an acid other than hydrofluoric acid of 3% by mass or less; and
(c) a second cleaning step of bringing a cleaned object of the polycrystalline silicon crushed lump obtained in the first cleaning step into contact with a second cleaning aqueous solution containing hydrofluoric nitric acid.

7. The method for producing the polycrystalline silicon crushed lump according to claim 6, further comprising:
(d) a third cleaning step of bringing a cleaned object of the polycrystalline silicon crushed lump obtained in the second cleaning step into contact with a third cleaning aqueous solution, which contains hydrogen peroxide and hydrofluoric acid and has a content of an acid other than hydrofluoric acid of 3% by mass or less.

8. The method for producing the polycrystalline silicon crushed lump according to claim 7, wherein
during the third cleaning step (d), the third cleaning aqueous solution discharged in the third cleaning step (d) is reused as a part or all of the first cleaning aqueous solution in the first cleaning step (b).

9. The method for producing the polycrystalline silicon crushed lump according to claim 7 or 8, further comprising:
(e) a fourth cleaning step of bringing a cleaned object of the polycrystalline silicon crushed lump obtained in the third cleaning step into contact with a fourth cleaning aqueous solution containing hydrofluoric nitric acid.

10. The method for producing the polycrystalline silicon crushed lump according to claim 9, wherein
during the fourth cleaning step (e), the fourth cleaning aqueous solution discharged in the fourth cleaning step (e) is reused as a part or all of the second cleaning aqueous solution in the second cleaning step (c).
